# EUROPÄISCHE PATENTSCHRIFT

(11) **EP 0 982 612 B1**
(45) Veröffentlichungstag und Bekanntmachung des Hinweises auf die Patenterteilung: **28.12.2005**
(21) Anmeldenummer: 98116056.7
(22) Anmeldetag: 26.08.1998
(51) Int. Cl.: G02B 7/00

(54) **Anordnung zum Befestigen eines Halteorgans**
Mount fixing device
Dispositif de fixation d'une monture

(43) Veröffentlichungstag der Anmeldung: 01.03.2000
(73) Patentinhaber: Vogt, Philippe, 25048 Besancon (FR)
(72) Erfinder: Vogt, Philippe, 25048 Besancon (FR)

(56) Entgegenhaltungen:
- GB-A- 2 292 465
- US-A- 5 703 992
- PATENT ABSTRACTS OF JAPAN vol. 095, no. 010, 30. November 1995 & JP 07 191246 A (SIGMA KOKI KK), 28. Juli 1995
- PATENT ABSTRACTS OF JAPAN vol. 008, no. 254 (P-315), 21. November 1984 & JP 59 124307 A (NIHON SEKIGAISEN KOGYO KK), 18. Juli 1984

## Beschreibung

Die Erfindung betrifft eine Anordnung zum Befestigen eines Halteorgans für ein optisches Gerät an einem Tragteil gemäss dem Oberbegriff des Anspruches 1.

Es ist bekannt, das Halteorgan am Tragteil mittels einer Schraubverbindung zu befestigen, welche drei Feststellschrauben oder, bei einer anderen Ausführung, zwei Schrauben und einen Zentrierstift enthält. Die bekannten Anordnungen erfordern jeweils eine sorgfältige Handhabung beim Zusammenführen und Positionieren der zu verbindenden Teile sowie einen entsprechenden Zeitaufwand beim Einsetzen und Lösen der zwei bzw. drei Feststellschrauben.

Aus der JP 07 191246 A ist eine Anordnung der eingangs genannten Art bekannt, die zum Feststellen eines auf dem Tragteil verschiebbar angebrachten Haltorgans für ein optisches Gerät bestimmt ist. Der Tragteil besteht aus einer Grundplatte mit zwei davon abstehenden schienenartigen Abschnitten, in denen zwei parallel verlaufende Führungsnuten ausgebildet sind. Als Halteorgan dient eine auf die schienenartigen Abschnitte aufsetzbare Tragplatte mit einem an ihrer Unterseite vorgesehenen leistenförmigen Ansatz, der nach Art einer Keilverbindung in eine der Führungsnuten eingreift, derart, dass die Tragplatte zur Einstellung der Position des optischen Gerätes gleitend verschiebbar auf den Abschnitten der Grundplatte angeordnet ist. Die Schraubverbindung umfasst vier Feststellschrauben mit Sechskantmuttern, wobei jeder der Führungsnuten zwei Schrauben zugeordnet sind, welche durch in der Tragplatte vorgesehene Gewindebohrungen in einen erweiterten Abschnitt der betreffenden Führungsnut einführbar sind, in dem die zugehörigen Muttern verschiebbar und gegen Drehung gesichert angeordnet sind. Mit diesem Halter wird bezweckt, die exakte Einstellung des optischen Gerätes zu erleichtern.Als nachteilig wird die für diese Anordnung erforderliche, besondere Ausbildung der Führungsnuten und eine relativ aufwendige Handhabung der mehrteiligen Schraubverbindung angesehen.

Der Erfindung liegt die objektive Aufgabe zugrunde, eine verbesserte Anordnung der eingangs genannten Art zum Befestigen eines Halteorgans immer in ein und derselben Stellung an einem Tragteil zu schaffen, bei welcher Anordnung die vorstehend genannten Nachteile nicht auftreten.

Diese Aufgabe wird erfindungsgemäss mit den Merkmalen des Anspruchs 1 gelöst.

Die erfindungsgemässe Ausführung ergibt eine Anordnung in einer gegenüber bisherigen Ausführungen wesentlich vereinfachten, robusten Bauweise, mit kostengünstig herstellbaren Bauteilen, welche eine mit vorteilhaft vereinfachten, robusten Bauweise, mit kostengünstig herstellbaren Bauteilen, welche eine mit vorteilhaft geringem Arbeitsaufwand erzielbare, einfache und sichere Handhabung der Anordnung gewährleisten.

Vorteilhafte Ausführungsformen der Erfindung ergeben sich aus den abhängigen Ansprüchen.

Nachfolgend wird die Erfindung anhand der beiliegenden Zeichnung erläutert. Es zeigen:
- Fig.1: eine Seitenansicht einer Alternative zu der erfindungsgemässen Anordnung;
- Fig.2: eine Seitenansicht mit einem Teilschnitt einer erfindungsgemässen Anordnung.

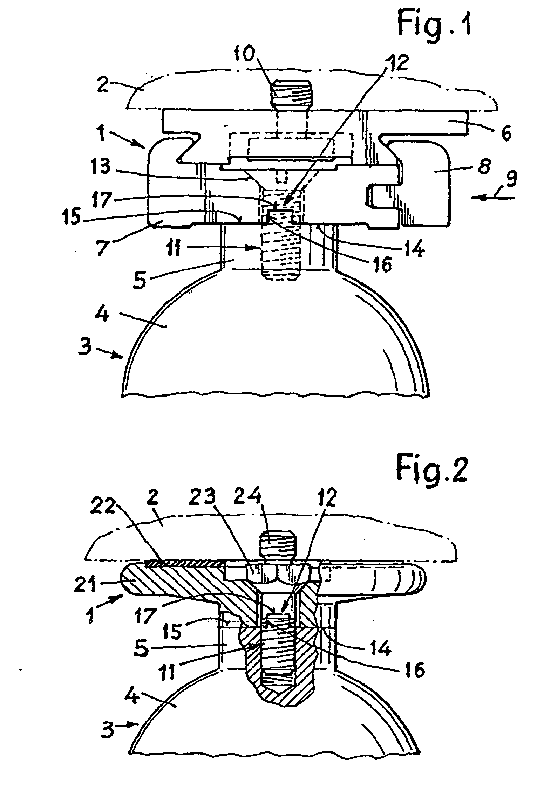

Die Anordnung nach Fig.1 dient zum Befestigen eines Halteorgans 1 für ein strichpunktiert angedeutetes optisches Gerät 2 an einem Tragteil 3, der darstellungsgemäss durch einen Kugelkopf 4 mit einem zylindrischen Aufsatz 5 gebildet ist. Der Kugelkopf 4 kann in einer nicht dargestellten Halterung eines Stativs oder dgl. befestigt werden. Gemäss Fig.1 ist das Halteorgan 1 als Einrichtung zum Feststellen einer Führungsschiene 6 ausgebildet, die mittels einer Schraube 10 mit dem optischen Gerät 2 kuppelbar ist. Das Halteorgan 1 umfasst einen auf den Tragteil 3 aufsetzbaren ersten Halteteil 7 und einen mit diesem beweglich verbundenen zweiten Halteteil 8, der über nicht dargestellte Spannmittel in Richtung des Pfeiles 9 gegen die auf dem ersten Halteteil 7 senkrecht zur Zeichenebene verschiebbar angebrachte Führungsschiene 6 verspannbar ist, so dass diese verstellbar und feststellbar gehalten wird.

Das Halteorgan 1 und der Tragteil 3 sind mittels einer Schraubverbindung 11 und einer Keilverbindung 12 miteinander kuppelbar. Die Schraubverbindung 11 enthält eine einzige Feststellschraube 13 mit einem in eine Aufnahmebohrung des ersten Halteteils 7 versenkt einsetzbaren Schraubenkopf, darstellungsgemäss eine in eine Gewindebohrung des Tragteils 3 einschraubbare Senkkopfschraube. Das Halteorgan 1 ist mit einer quer zur Feststellschraube 13 verlaufenden ersten Stützfläche 14 auf eine entsprechende, am Tragteil 3 ausgebildete zweite Stützfläche 15 aufsetzbar. Die Keilverbindung 12 enthält eine in einer der Stützflächen, darstellungsgemäss in der ersten Stützfläche 14, quer zur Achse der Aufnahmebohrung angeordnete Führungsnut 16 und eine an der anderen, darstellungsgemäss zweiten Stützfläche 15 ausgebildete, mit der Führungsnut 16 formschlüssig zusammenführbare Leistenpartie 17.

Die Anordnung nach Fig.2 entspricht in den wesentlichen Teilen derjenigen nach Fig.1, wobei bei dieser Ausführungsform das Halteorgan 1 ein mit dem optischen Gerät 2 unmittelbar kuppelbarer Stützteil 21 ist, der darstellungsgemäss mit einer tellerförmigen Aufsetzpartie ausgeführt ist. Der Stützteil 21 kann mit einer Auflage 22 aus einem gummiartigen Material zur Aufnahme des Gerätes 2 versehen sein. Wie aus der Fig.2 weiter hervorgeht, enthält die Schraubverbindung 11 eine einzige Feststellschraube 23 mit einem in den Stützteil 21 versenkt einsetzbaren, darstellungsgemäss vierkantförmigen Schraubenkopf, der zum Zusammenführen mit einem Steckschlüssel bestimmt ist und der mit einem über den Stützteil 21 vorstehenden Gewindezapfen 24 versehen ist. Der mit dem Tragteil 3 gekuppelte Stützteil 21 ist daher über den Gewindezapfen 24 mit dem Gerät 2 fest verschraubbar.

Bei den vorstehend beschriebenen Anordnungen wird jeweils das mit der Führungsnut 16 versehene Halteorgan 1 auf den mit der Leistenpartie 17 versehenen Tragteil 3 aufgesetzt und damit vorzentriert. Die erfindungsgemässe Anordnung gestattet somit auf einfache Weise eine genaue und sichere Positionierung des jeweiligen Halteorgans 1 auf dem Tragteil 3 und gewährleistet zugleich eine mit minimalem Arbeits- und Geschicklichkeitsaufwand erzielbare Kupplung bzw. Entkupplung der betreffenden Teile.

## Patentansprüche

1. Anordnung zum Befestigen eines Halteorgans (1) für ein optisches Gerät (2) an einem Tragteil (3), mittels einer Schraubverbindung (11) zum Verbinden des Halteorgans (1) mit dem Tragteil (3) und einer Keilverbindung (12), **dadurch gekennzeichnet, dass** die Schraubverbindung (11) eine einzige, in den Tragteil (3) einschraubbare Feststellschraube (23) mit einem im Halteorgan (1) versenkbaren konischen Schraubenkopf enthält, um das Halteorgan (1) bezüglich des Tragteils (3) zu zentrieren, und dass die Feststellschraube (23) in der Symmetrieachse der Anordnung angeordnet ist.

2. Anordnung nach Anspruch 1, mit einer am Halteorgan (1) ausgebildeten, quer zur Schraubverbindung (11) verlaufenden ersten Stützfläche (14) und einer ihr zugeordneten, am Tragteil (3) ausgebildeten zweiten Stützfläche (15), **dadurch gekennzeichnet, dass** die Keilverbindung (12) eine an einer der Stützflächen (14) ausgebildete, in der Symmetrieachse angeordnete Führungsnut (16) und eine an der anderen Stützfläche (15) ausgebildete, mit der Führungsnut (16) formschlüssig zusammenführbare Leistenpartie (17) enthält.

3. Anordnung nach Anspruch 1 oder 2, **dadurch gekennzeichnet, dass** als Halteorgan (1) eine Einrichtung zum Feststellen einer verschiebbaren, mit dem optischen Gerät (2) kuppelbaren Führungsschiene (6) vorgesehen ist.

4. Anordnung nach Anspruch 1 oder 2, **dadurch gekennzeichnet, dass** als Halteorgan (1) ein mit dem optischen Gerät (2) kuppelbarer Stützteil (21) vorgesehen ist, und dass die Feststellschraube (23) mit einem vom Schraubenkopf vorstehenden, mit dem optischen Gerät (2) verschraubbaren Gewindezapfen (24) versehen ist.

## Claims

1. An arrangement for the attachment of a holding member (1) for an optical apparatus (2) to a carrier part (3) by means of a screw connection (11) for the connection of the holding member (1) to the carrier part (3) and by means of a key connection (12), **characterised in that** the screw connection (11) contains a single fixing screw (23) which can be screwed into the carrier part (3) and which has a conical screw head which can be countersunk in the holding member (1) to centre the holding member (1) with respect to the carrier part (3); and **in that** the fixing screw (23) is arranged in the symmetry axis of the arrangement.

2. An arrangement in accordance with claim 1, including a first support surface (14) formed on the holding member (1) and extending transversely to the screw connection (11) and a second support surface (15) associated with it and formed on the carrier part (3), **characterised in that** the key connection (12) contains a guide groove (16) formed on one of the support surfaces (14) and arranged in the symmetry axis and a strip portion (17) formed on the other support surface (15) and being capable of being brought into shape-matched engagement with the guide groove (16).

3. An arrangement in accordance with claim 1 or claim 2, **characterised in that** a device for the fixing of a displaceable guide rail (6) which can be coupled to the optical apparatus (2) is provided as the holding member (1).

4. An arrangement in accordance with claim 1 or claim 2, **characterised in that** a support part (21) which can be coupled to the optical apparatus (2) is provided as the holder member (1); and **in that** the fixing screw (23) is provided with a threaded spigot (24) which projects from the screw head and can be screwed to the optical apparatus (2).

## Revendications

1. Dispositif de fixation d'un organe de maintien (1) pour un appareil optique (2) sur un élément porteur (3), au moyen d'une liaison vissée (11) pour relier l'organe de maintien (1) à l'élément porteur (3) et d'un clavetage (12), **caractérisé en ce que** la liaison vissée (11) contient une unique vis de blocage (23) qui peut être vissée dans l'élément porteur (3) et qui est dotée d'une tête de vis conique pouvant être noyée dans l'organe de maintien (1) afin de centrer l'organe de maintien (1) par rapport à l'élément porteur (3), et **en ce que** la vis de blocage (23) est disposée dans l'axe de symétrie du dispositif.

2. Dispositif selon la revendication 1, avec une première surface de soutien ou d'appui (14) configurée sur l'organe de maintien (1) et s'étendant transversalement à la liaison vissée (11) et avec une deuxième surface de soutien ou d'appui (15) configurée sur l'élément porteur (3) et associée à la première, **caractérisé en ce que** le clavetage (12) comporte une rainure de guidage (16) configurée sur l'une (14) des surfaces de soutien ou d'appui et disposée dans l'axe de symétrie, et une partie formant barrette (17) configurée sur l'autre surface de soutien ou d'appui (15) et pouvant être réunie en engagement positif à la rainure de guidage (16).

3. Dispositif selon la revendication 1 ou 2, **caractérisé en ce qu'**il est prévu comme organe de maintien (1) un organe pour bloquer une glissière de guidage (6) pouvant être accouplée à l'appareil optique (2).

4. Dispositif selon la revendication 1 ou 2, **caractérisé en ce qu'**il est prévu comme organe de maintien (1) un élément de soutien ou d'appui (21) pouvant être accouplé à l'appareil optique (2), et **en ce que** la vis de blocage (23) est pourvue d'un tenon fileté (24) dépassant de la tête de vis et pouvant être assemblé par vissage à l'appareil optique (2).
